# EUROPEAN PATENT APPLICATION

(11) **EP 0 693 633 A2**
(43) Date of publication of application: **24.01.1996**
(21) Application number: 95305048.1
(22) Date of filing: 18.07.1995
(51) Int. Cl.: F16D 63/00, F16D 65/46, F16D 65/16

(54) **Electromagnetically controlled permanent magnet brake**

(30) Priority: 22.07.1994 GB 9414848
(71) Applicant: TI MATRIX ENGINEERING LIMITED, Brechin Angus Scotland DD9 7EP (GB)
(72) Inventor: Anderson, Peter, Brechin, Angus, Scotland DD9 6JZ (GB); Inglis, Stuart James, Kirriemuir, Angus, Scotland DD8 5EE (GB)
(74) Representative: W.P. THOMPSON & CO.

(57) **Abstract**

An electrically controllable brake device comprises braking means responsive to both a permanent magnet (12) and an electromagnet (14) which can be energised so as to produce a braking force. The permanent magnet (12) is formed of a rare each material which is strongly resistant to de-magnetisation by the opposed magnetic flux caused by the electromagnet (14), and can thus be placed adjacent the electromagnet (14).

## Description

The invention relates to an electrically controllable brake device, more specifically to the kind of electrically controllable brake device in which braking means is responsive to a permanent magnet as well as to an electromagnet which can be selectively energised so as to produce a braking force dependent on the energisation.

In a brake device of this kind described in Application EP 94 300 857.3, the permanent magnet provides a braking force which persists in the event of failure of the supply energising the electromagnet. The presence of the permanent magnet does not derogate from the control available by means of the electromagnet because this can be energised so as either to augment or to oppose the braking force due to the permanent magnet. By energising the electromagnet to provide a magnetic flux equal and opposed to that of the permanent magnet, the brake device can be held in the released condition, from which an increasing brake force can be obtained by either increasing the electromagnet energisation so that the brake force is due solely to the electromagnet, or by decreasing the energisation, until this reaches zero, when only the permanent magnet is operative. From this condition, an immediate increase in brake force can be obtained by energising the electromagnet with reversed polarity so as to add to the effect of the permanent magnet.

The present invention is concerned with improvements to the magnet structure and to the organisation of the component parts of an electrically controllable brake device of the kind described.

The invention accordingly provides a magnet structure for a brake device of the kind described in which the permanent magnet is a moulded compound containing a selected proportion of high strength rare earth magnetic material. The permanent magnet can comprise plural magnet segments, which may be compression moulded. The base material of the segments may be chosen to have flexibility so that segments of the same shape as manufactured can be incorporated in brake devices of different kinds.

The permanent magnet can be annular, or composed of part annular segments, and can conveniently have a tubular or sleeve-like shape. Because of the material of which it is made, the magnet strongly resists de-magnetisation by opposed magnetic flux extending through it, so the magnet can be positioned in the magnet structure in direct adjacency with the electromagnet. A series magnet structure can thus be employed, allowing improved design possibilities and savings in manufacturing costs.

The invention also provides a brake device of the kind described in which the magnet structure is received between an armature member on which the magnet structure act and an operating member, for example, a pressure plate, movement of which generates the braking effect.

The operating armature members are rigidly connected together by one or more elements which conveniently extend through the magnet structure and which guide the movements of the members as braking pressure is applied and released. Magnetic flux is thus not required to extend through any actual braking elements, typically relatively engageable and disengageable friction plates. This configuration of the brake device facilitates adjustment to accommodate wear of the braking means, and permits the permanent magnet to be spaced away from the braking means so as to be protected against the heat that is generated in them in use.

The invention thus provides a convenient and economical magnetic and structural configuration for a brake device of the kind described.

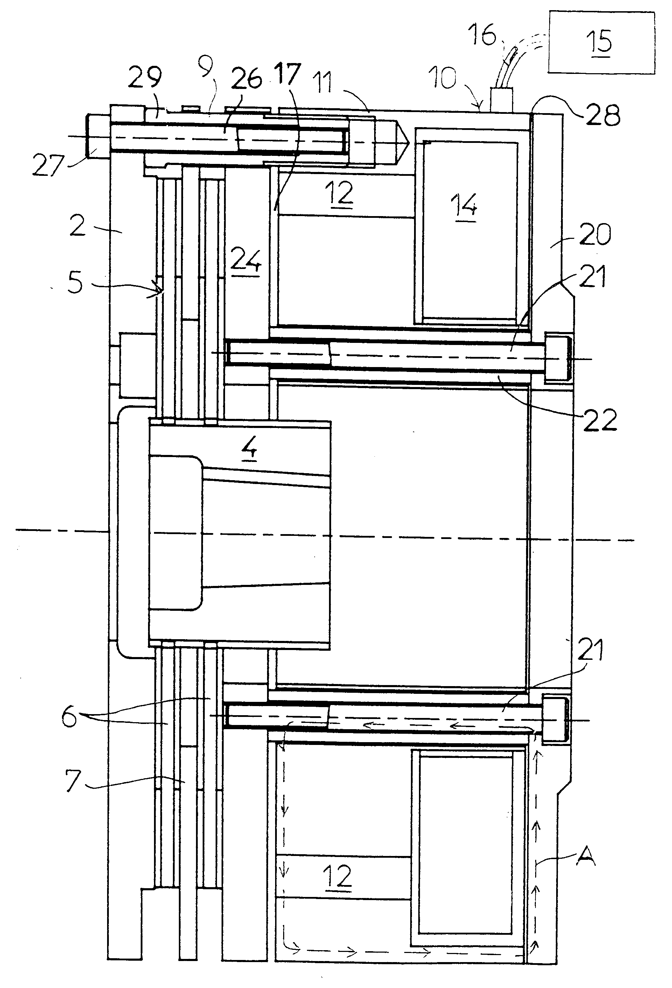

The invention is further described below, by way of example, with reference to the accompanying drawings, in which the single figure is a sectional side view of an electrically controllable brake device embodying the invention.

The brake device illustrated comprises a mounting plate 2 and a hub 4 in a central aperture of the mounting plate, the hub having an internal bore within which a rotatable shaft (not shown) to be braked is received, the hub and the shaft being connected together against relative rotation by means of a splined connection. The shaft is typically an electric motor or gearbox shaft and the mounting plates 2, is secured to the motor or the gearbox housing or frame.

Concentrically surrounding the hub 4 is a friction plate stack 5, comprising annular inner friction plates 6 and an annular outer friction plate 7 between them. A splined connection between the outer surface of the hub 4 and the inner edges of the inner friction plates 6 allows relative axial sliding between the hub and the plates but ensure that they rotate together. Sleeves 9, extend from the mounting plate 2, beyond the friction plate stack 5 to support a magnet structure 10, and the outer friction plate, which is movable axially, is restrained against rotation by reception of the sleeves 9 in apertures at the outer edge of the plate.

The magnet structure 10 supported by the sleeves 9 includes a frame 11 enclosing an annular, sleeve-like, permanent magnet 12.

The permanent magnet 12 comprises a plurality of arcuate portions, each of a rare earth permanent magnet material conveniently Neodium Iron Boron (Nd FeB), so as to be highly resistant to de-magnetisation. The permanent magnet material is moulded in a flexible base material so as to be adaptable to different magnet configurations. The frame also encloses an annular electromagnet 14 which abuts the end of the permanent magnet 12 remote from the friction plate stock. The energising or control coil, of the electromagnet 14 can be selectively and controllably energised by variable direct current from a control source 15 (shown schematically), by way of leads 16. The permanent magnet 12 is thus spaced away from the friction plate stack 5, with an air gap 17 between them, so as not to be unduly affected by heat necessarily generated in use within the stack. The magnet is thus protected against loss of magnetic force due to increased temperature. The heat insulating effect of the air gap 17 can be enhanced by a layer of heat insulating material if desired.

The magnet structure 10 acts on an annular armature plate 20 at the end of the brake device remote from the mounting plate 2. Bolts 21 within hollow push rods 22 which carry the compressive loads developed in operation of the brake device, extend through apertures in the armature plate and are guided in aligned passages in the magnet structure frame 11. The free ends of the bolts 21 are received in tapped recesses in an annular pressure plate 24 juxtaposed to the friction pressure plate stack 5. The armature 20, the bolts 21, the push rods 22 and pressure plate 24 thus form a self-assembly movable axially of the device within the frame 11 to engage the pressure with the friction plate stack 5 to effect braking, or to separate the plate from the stack to effect brake release.

To compensate for wear of the friction plates 6,7 the magnet structure 10, and thus the sub-assembly of which the pressure plate 24 is a part, can be moved towards the mounting plate 21 from time to time as the degree of the wear requires. For this purpose the free ends of the sleeves 9 are screw-threaded and received in recesses in the frame 11 which are correspondingly tapped. Bolts 26, of which the heads 27 are accessible at the outer side of the mounting plate 2, extend into the sleeves 9 and engage with tapped portions within them, so as to lock the sleeves against rotation.

When adjustment is required, the bolts 26 are unlocked by means of the heads 27. The sleeves 9 can then be rotated, to effect axial movement relative to the mounting plate 2, so that the spacing 28 between the armature 20 and the magnet structure 10 is returned to the optimum dimension. The sleeves 9 are provided with hexagonal portions 29 adjacent the plate 2 to facilitate rotation. When the desired spacing 28 has been obtained the sleeves 9 are again locked by the bolts 26.

As shown at the lower part of the figure only, the permanent magnet 12 provides a toroidal magnetic flux, indicated by the arrow A, which extends from the magnet, the frame 11 radially inwardly of the armature plate 20, and back to the magnet through frame and the bolts 21. The effect of this magnetic flux is to apply a permanent braking force, by compression of the friction plate stack 5 between the pressure plate 24 and the mounting plate 2.

Energisation of the coil of the electromagnet 14 by direct current from the control source 15 produces a second magnetic flux following generally the path of the flux indicated by the arrow A.

Depending on the polarity and strength of the current supplied, the electromagnet can be energised so as either to augment or to oppose the braking force due to the flux from the permanent magnet 12. Thus, by energising the electromagnet 14, to provide a magnetic flux equal and opposed to that of the permanent magnet 12, the brake device can be held in the released condition, because there is no force acting on the armature 20 to urge the pressure plate 24 against the friction plate stack 5. From this condition, an increasing brake force can be obtained by either increasing the electromagnet energisation so that the brake force is due solely to the electromagnet, or by decreasing the energisation, until this reaches zero, when only the permanent magnet is operative. When the permanent magnet is operative alone, an immediate increase in brake force can be obtained by energising the electromagnet with reversed polarity so as to add to the effect of the permanent magnet.

The invention can of course be embodied in a variety of other ways than as described and illustrated.

## Claims

1. A magnet structure for an electrically controllable brake device in which braking means is responsive to a permanent magnet as well as to an electromagnet, the electromagnet being selectively energisable so as to produce a braking force dependent on the energisation, characterised in that the permanent magnet is a moulded compound containing a selected proportion of high strength rare earth magnetic material.

2. A brake device as claimed in claim 1, in which the permanent magnet comprises a plurality of magnet segments.

3. A brake device as claimed in claim 2, wherein the magnet segments are compression moulded.

4. A brake device as claimed in claim 2 or 3, in which the base material of the segments is flexible such that segments manufactured in the same shape can be incorporated in brake devices of different kinds.

5. A brake device as claimed in any preceding claim, in which the permanent magnet is annular in shape.

6. A brake device as claimed in claim 5, in which the permanent magnet is composed of part annular segments.

7. A brake device as claimed in claim 5 or 6, in which the permanent magnet has a tubular or sleeve-like shape.

8. An electrically controllable brake device in which braking means is responsive to a permanent magnet as well as to an electromagnet, the electromagnet being selectively energisable so as to produce a braking force dependent on the energisation, characterised in that the magnet structure is received between an armature member, on which the magnet structure acts and an operating member, movement of which generates the braking effect.

9. A brake device as claimed in claim 8, in which the operating member is a pressure plate.

10. A brake device as claimed in claim 8 or 9, in which the operating member and the armature member are rigidly connected together by one or more elements which extend through the magnet structure and which guide the movements of the members as braking pressure is applied and released.
